# EUROPEAN PATENT SPECIFICATION

(11) **EP 0 501 817 B1**
(45) Date of publication and mention of the grant of the patent: **27.03.1996**
(21) Application number: 92301705.7
(22) Date of filing: 28.02.1992
(51) Int. Cl.: F16K 37/00

(54) **Valve**
Ventil
Soupape

(30) Priority: 01.03.1991 GB 9104296
(43) Date of publication of application: 02.09.1992
(73) Proprietor: IMI NORGREN LIMITED, Lichfield Staffordshire, WS13 6SB (GB)
(72) Inventor: Collins, Roderick John, Mawdesley, Ormskirk, Lancashire (GB); Johnson, Douglas, Birkdale, Southport, Merseyside (GB)
(74) Representative: Lane, Michael John

(56) References cited:
- GB-A- 1 598 969
- GB-A- 2 171 497
- GB-A- 2 171 500
- US-A- 4 341 241
- US-A- 4 784 178

## Description

This invention relates to fluid flow control valves, as are, according to the preamble of claim 1, known e.g. from GB-A-2 171 500.

The invention has especial, but not exclusive, application to the control of the supply of gas to gas-fired appliances, for example gas-fired boilers, and the remainder of this specification refers largely to such an application by way of example only.

Gas-fired boilers typically have two valves, both of which may be solenoid-actuated, in series in the gas supply line. These valves are designed to be fail-safe, in that they incorporate a spring or the like which holds the valve closure against its seat except when the solenoid coil is energised. The use of two valves provides an additional level of safety in the event that one of the valves fails in service, for example in the event that the spring of one of the valves fails. However, should the second valve also fail, the gas supply line will not be shut off when desired with the consequent risk of fire or explosion.

In the case of industrial gas-fired appliances, it is known to incorporate an automatic test procedure for checking that both valves are properly closed prior to each start-up. Such a procedure typically involves the use of installed by-pass valves and a pressure-detecting device and ensures that start-up cannot take place if one of the valves is not properly closed. The additional by-pass valves, the pressure-detecting device and the test program are relatively expensive, but form a small part of the cost of an industrical gas-fired appliance. Other checking techniques are known, for example where a shutter-type valve is used, a microswitch may be used which is actuated by the shutter when the valve is fully closed.

Prior patent specifications Nos GB-A-2171500, US-A-4341241 and US-A-4784178 describe valves wherein a valve seat and valve closure comprise electrically conductive elements that complete a circuit when, and so as to indicate that, the valve is closed. In those proposals, however, if the closure and/or the seat were even slightly out of true, for example tilted, damaged or contaminated with dirt particles, a "valve closed" indication would nevertheless be given by virtue of electrical contact between the closure member and its seat, whereas in fact flow of gas through the valve would still be possible.

According to the present invention there is provided a fluid flow control valve including a body having a passageway therein, a fluid inlet and a fluid outlet connected to the passageway, an annular valve seat within the passageway intermediate the inlet and outlet, a valve closure movable relative to the seat between a "valve open" position and a "valve closed" position, the valve seat and the valve closure comprising respective electrically conductive elements that are spaced from one another in the valve open position and in contact with one another in the valve closed position, and means to connect said electrically conductive elements to an electrical circuit responsive to contact therebetween, characterised in that the electrically conductive elements are adapted to provide a "valve closed" indication within said circuit only when there is a complete circumferential seal between the valve closure and the valve seat.

The electrical circuit (which term is intended to include "electronic" circuits) may serve, for example, to provide a visible or audible signal for indicating the position of the valve. This is particularly useful where the valve is remotely and/or automatically operated, for example electrically or magnetically, and where it might otherwise prove difficult or impossible to check that the valve is, at any given instant, in its desired position. Thus, for example, the signal or lack of it could be used to provide an indication of malfunctioning of the valve. Alternatively, or in addition, the electrical circuit, depending on whether or not the valve is properly closed, could be utilised to cause or indeed prevent some subsequent event occurring.

In a preferred embodiment of the invention the seat comprises a substantially annular member of electrically insulating material, for example of a rubber or plastics, defining a fluid flow orifice and which supports, flushly on the surface thereof facing the closure, a set of a plurality of spaced, electrically conductive areas and the closure comprises a similar member whose conductive areas face those of the seat, the two sets of conductive are is being arranged relative to one another such that, when and only when the closure forms a complete circumferential seal with the seat, two selected adjacent areas of one of the members (preferably that comprised in the seat) become electrically connected to one another by virtue of a conductive path created by co-operation of the conductive areas of the two members with one another, the two adjacent areas having means to connect them to the electrical circuit. The conductive areas may, for example, be of a metal or of a conductive rubber; in the latter case the conductive and non-conductive areas may conveniently be moulded together.

In an alternative embodiment designed to ensure that a "valve closed" indication is given only when there is a complete circumferential seal between the seat and the closure, the seat comprises a substantially annular metallic member and the closure comprises a member of finite electrical resistance such that the amount of electrical current from a constant voltage source (or the voltage from a constant current source) flowing between (or existing across) the two members when they are in contact is dependent upon the degree of contact between them, ranging from a minimum at, say, mere point contact and a maximum when there is complete circumferential ie sealing contact. In an equivalent embodiment, the seat comprises a substantially annular member of finite electrical resistance and the closure is made of a metallic material. In either case, the seat and closure are connectable to the electric circuit. The member of finite electrical resistance is preferably a rubber containing special fillers and such materials are commercially available.

A valve of the invention that is to be used in, for example, a domestic gas-fired boiler will be connectable into an electrical circuit designed to ensure that, particularly at start-up, ignition of the gas cannot occur unless, during the usual start-up sequence, the valve is properly closed and is, therefore, at least at that stage functioning correctly. On shutdown a check can also be made and restart prevented and/or an alarm given if the valve is not properly closed.

The invention will now be described in more detail, by way of example only, with reference to the accompanying drawings in which
Fig 1 is a side elevation, partly in section, of a disc-on-seat solenoid valve constructed in accordance with the invention;
Fig 2 is a perspective view of one form of valve seat and valve closure suitable for use in the valve of Fig 1;
Fig 3 is a perspective view of another form of valve seat and valve closure suitable for use in the valve of Fig 1; and
Fig 4 is a diagram of a typical sequence control circuit of the general type commonly embodied in domestic gas-fired boilers, showing how the 'valve-closed' indication provided by a valve of the invention may be utilised.

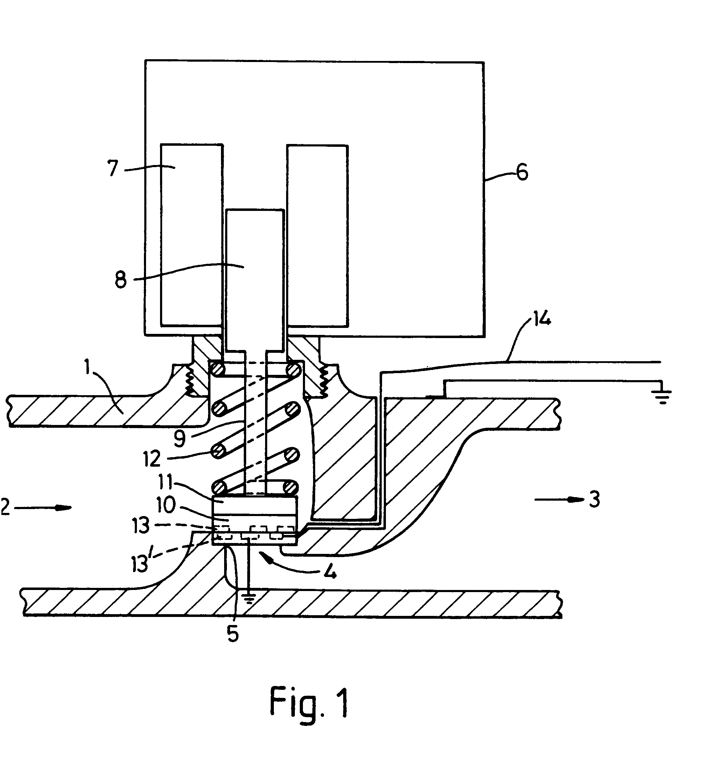

Referring firstly to Fig 1 of the drawings, the valve shown is largely a conventional disc-on-seat solenoid valve. The conventional parts comprise a main body 1 which defines a gas inlet 2 and a gas outlet 3, intermediate which is an orifice 4 defined by a valve seat 5. Mounted on the body 1 is a housing 6 containing a solenoid coil 7. The coil 7 surrounds a core 8 of ferromagnetic material and the core 8 has an axial extension 9 whose lower end supports a valve closure 10 mounted on a rigid, metallic support 11 that can sealingly co-operate with the valve seat 5. When the solenoid coil 7 is de-energised, the valve is maintained in a closed position with the aid of a compression spring 12 which holds the closure 10 in tight sealing contact with the seat 5. The valve is shown in this position in Fig 1.

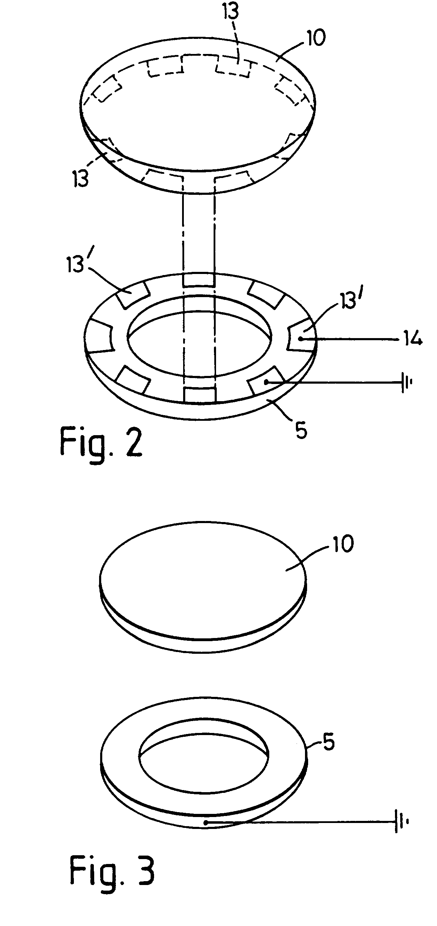

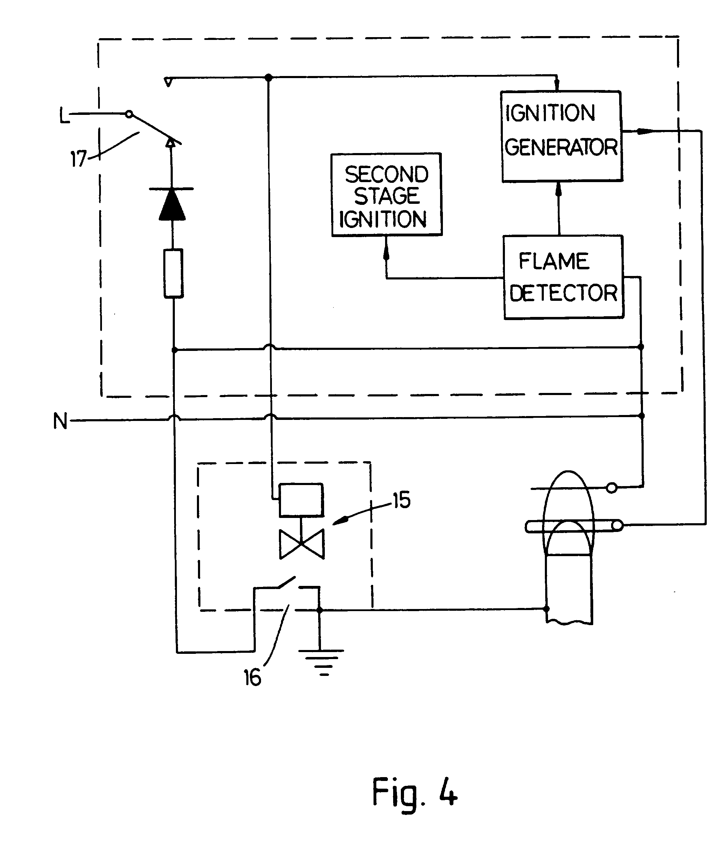

Normally, the closure 10 comprises a disc of plain rubber or like material and the seat 5 is metallic. In accordance with one embodiment of the present invention, however, the disc is of an electrically insulating material, eg of a rubber, which has flushly mounted in its lower surface and around its periphery a plurality of discrete equi-spaced conductive elements, such as small metal plates or areas of conductive rubber 13. These can be more clearly seen in Fig 2. Further, the seat 5 comprises an annular disc with conductive elements 13' in its upper surface, as can be seen in Fig 2, the conductive elements 13' being off-set relative to the elements 13 of the closure 10 for the purpose described in more detail below. One of the elements 13' is connected to an insulated conductor 14 for connection into an electrical circuit, for example as is described with reference to Fig 4, and an adjacent element 13' is in electrical contact with earth via the body 1 of the valve. Alternatively, the adjacent element 13' could be connected to the circuit by way of a second insulated conductor. Thus, when the valve is in its open position, ie upon energisation of the solenoid 7, there is no continuity between the conductor 14 and earth. On the other hand, when the valve is fully and properly closed, the series of elements 13 and 13' co-operate with one another in "bridging" fashion and create continuity between the conductor 14 and earth. In other words the closure 10 and the seat 5 act as an electrical switch aswell as, of course, as a fluid flow valve. However, should the closure 10 not fully engage the seat 5 when the valve is ostensibly in its closed position, ie when the solenoid 7 is de-energised, for example because the closure 10 has become damaged, tilted or contaminated with dirt particles, then the requisite bridging of the elements 13 and 13' will not occur. The resulting discontinuity between the conductor 14 and earth may, therefore, be utilised to indicate a fault condition in the valve.

Referring now to Fig 3 of the drawings, the closure 10 comprises a disc made of a filled rubber that is partially electrically conductive and of finite resistance. The disc is mounted on the rigid metallic support 11 and is connectable into an appropriate circuit by an insulated conductor via the support 11 and the spring 12. The seat 5 is of a conductive metal (which may be constituted by the material of the body 1 or be a separate annular insert therein) and, as in the embodiment shown in Figs 1 and 2, is connected to earth. Thus, the degree of sealing between the closure 10 and the seat 5, when the solenoid 7 is de-energised, will govern the amount of current flowing between the disc and the seat 5 for a given potential difference between the two, being a maximum when there is complete sealing contact and less than the maximum if and when the sealing contact is incomplete. A current level lower than the pre-determined maximum (as determined by, for example, a comparator circuit) may be utilised to indicate a fault condition. Such pre-determined maximum could, for example, be determined during a production stage of the valve (when complete sealing could be ensured) and could further be "stored" in a microprocessor device incorporating a comparator circuit. In such a case, the microprocessor could be programmed automatically to take account of any variations in the maximum value that might occur during service of the valve, for example, because of "creep" of, or other ageing phonomena associated with, the rubber disc 10 which might alter its resistance.

Referring to Fig 4, there is shown diagramatically a typical gas-fired boiler safe start check/ignition circuit incorporating the valve 15 illustrated in Figs 1 and 2 (which may, for example, be one of two like main gas valves as described previously), in which the switch constituted by the closure 10/seat 5 is designated numeral 16. As will be appreciated by those skilled in the art, in the event that, at start up, the valve 15 is not properly closed, ie. is in a fault condition, the switch 16 will be open and, therefore, a simulated flame condition will obtain thereby preventing commencement of the ignition sequence. This is the position shown in Fig 4. However if the valve 15 is properly closed, as it should be, the switch 16 will be closed thereby suppressing the simulated flame condition and so ignition can proceed pursuant to change-over of the relay 17.

It will be appreciated that the invention will be applicable to other valves such as, for example, pneumatic change-over valves in which each seat and closure would comprise electrically conductive elements for monitoring correct operation of the valve.

## Claims

1. A fluid flow control valve including a body (1) having a passageway therein, a fluid inlet (2) and a fluid outlet (3) connected to the passageway, an annular valve seat (5) within the passageway intermediate the inlet and outlet, a valve closure (10) movable relative to the seat (5) between a "valve open" position and a "valve closed" position, the valve seat (5) and the valve closure (10) comprising respective electrically conductive elements that are spaced from one another in the valve open position and in contact with one another in the valve closed position, and means (14) to connect said electrically conductive elements to an electrical circuit responsive to contact therebetween, characterised in that the electrically conductive elements (5, 10; 13, 13') are adapted to provide a "valve closed" indication within said circuit only when there is a complete circumferential seal between the valve closure (10) and the valve seat (5).

2. A valve according to claim 1 wherein the seat (5) comprises a substantially annular member of electrically insulating material which supports flushly on, and around, the surface thereof facing the closure (10), a set of a plurality of mutually spaced, electrically conductive areas (13') and the closure (10) comprises a disc of electrically insulating material which supports flushly on, and arounded, the surface thereof facing the seat (5) a set of a plurality of mutually spaced, electrically conductive areas (13), the two sets of conductive areas (13, 13') being so arranged relative to one another that when, and only when, the closure (10) forms a complete circumferential seal with the seat (5) in the valve closed position, two adjacent conductive areas of one of the members become electrically connected to one another by virtue of a conductive path created by bridging co-operation of the conductive areas of the two members with one another, the two adjacent conductive areas having means (14) to connect them to the electrical circuit.

3. A valve according to claim 2 wherein said two adjacent conductive areas (13') are adjacent conductive areas of the seat (5).

4. A valve according to claim 2 or claim 3 wherein each said member comprises an electrically insulating polymer and said conductive areas (13, 13') comprise a metal or electrically conductive polymer.

5. A valve according to claim 4 wherein said polymer is, in each case, a rubber, the electrically insulating and conductive portions preferably having been comoulded together.

6. A valve according to claim 1 wherein the seat (5) comprises a substantially annular metallic member and the closure (10) comprises a disc comprising a material of finite electrical resistance such that the amount of electrical current from a constant voltage source (or the potential from a constant current source) flowing between (or existing across) the two members in the valve closed position is dependant upon the degree of contact between them, ranging from one limit, for example a minimum, at mere point contact and another limit, for example a maximum, when there is complete circumferential, ie. sealing, contact, and wherein the metallic member and the disc have means to connect them to the electrical circuit that is responsive, in use, to said current or potential value.

7. A valve as claimed in claim 6 wherein however the seat (5) comprises a substantially annular member comprising a material of finite electrical resistance and the closure (10) comprises a metallic disc.

8. A valve as claimed in claim 6 or 7 wherein the material of finite electrical comprises a filled polymer.

9. A valve according to any one of claims 1 to 8 wherein the electrical circuit is adapted to provide a visible or audible signal indicative of proper functioning or a malfunctioning of the valve and/or to cause or prevent a subsequent event occuring depending on whether or not the valve is functioning properly.

10. A gas-fuelled boiler including, as a main valve for the fuel feed, a valve (15) according to anyone of claims 1 to 9, whereby the valve is solenoid-actuated and the electrical circuit forms part of the start up/ignition sequence control circuit of the boiler.

## Patentansprüche

1. Ein Fluiddurchfluß-Kontrollventil, das einen Hauptkörper (1) mit einem Durchgang in diesem, mit einem mit dem Durchgang verbundenen Fluideinlaß (2) sowie Fluidauslaß (3) und mit einem ringförmigen Ventilsitz (5) innerhalb des Durchgangs zwischen dem Ein- und Auslaß, einen mit Bezug zum Sitz (5) zwischen einer "Ventil-offen"-Stellung sowie einer "Ventil-geschlossen"-Stellung bewegbaren Ventilschließkörper (10), wobei der Ventilsitz (5) und der Ventilschließkörper (10) jeweilige elektrisch leitfähige Elemente enthalten, die in der Offenstellung des Ventils voneinander beabstandet und in der Geschlossenstellung des Ventils miteinander in Berührung sind, und
Mittel (14), um die genannten elektrisch leitfähigen Elemente mit einer auf einen Kontakt zwischen diesen ansprechenden elektrischen Schaltung zu verbinden, umfaßt,
dadurch gekennzeichnet, daß die elektrisch leitfähigen Elemente (5, 10; 13, 13') dazu eingerichtet sind, eine Anzeige für "Ventil geschlossen" innerhalb der besagten Schaltung nur zu erzeugen, wenn ein vollständiger Abschluß in Umfangsrichtung zwischen dem Ventilschließkörper (10) und dem Ventilsitz (5) vorhanden ist.

2. Ein Ventil nach Anspruch 1, in welchem der Sitz (5) ein im wesentlichen ringförmiges Bauteil aus elektrisch isolierendem Material, das bündig an der sowie rund um dessen Fläche, die dem Schließkörper (10) zugewandt ist, einen Satz aus einer Mehrzahl von gegenseitig beabstandeten, elektrisch leitfähigen Flächen (13') trägt, umfaßt und der Schließkörper (10) eine Scheibe aus elektrisch isolierendem Material, das bündig an der sowie rund um dessen Fläche, die dem Sitz (5) zugewandt ist, einen Satz aus einer Mehrzahl von gegenseitig beabstandeten, elektrisch leitfähigen Flächen (13) trägt, enthält, wobei die beiden Sätze von leitfähigen Flächen (13, 13') relativ zueinander derart angeordnet sind, daß, wenn und nur wenn der Schließkörper (10) einen vollständigen Abschluß in Umfangsrichtung mit dem Sitz (5) in der Geschlossenstellung des Ventils bildet, zwei benachbarte leitfähige Flächen von einem der Bauteile miteinander aufgrund eines durch ein brückenbildendes Zusammenwirken der leitfähigen Flächen der zwei Bauteile miteinander erzeugten leitenden Pfades elektrisch verbunden werden, wobei die zwei benachbarten leitfähigen Flächen Mittel (14) besitzen, um jene mit der elektrischen Schaltung zu verbinden.

3. Ein Ventil nach Anspruch 1, in welchem die genannten zwei benachbarten leitfähigen Flächen (13') benachbarte leitfähige Flächen des Sitzes (5) sind.

4. Ein Ventil nach Anspruch 2 oder Anspruch 3, in welchem jedes erwähnte Bauteil ein elektrisch isolierendes Polymeres enthält und die genannten leitfähigen Flächen (13, 13') ein Metall oder ein elektrisch leitfähiges Polymeres umfassen.

5. Ein Ventil nach Anspruch 4, in welchem das besagte Polymere in jedem Fall ein Gummi ist, wobei die elektrisch isolierenden und leitfähigen Teile vorzugsweise gemeinsam zusammengeformt worden sind.

6. Ein Ventil nach Anspruch 1, in welchem der Sitz (5) ein im wesentlichen ringförmiges, metallisches Bauteil umfaßt und der Schließkörper (10) aus einer Scheibe besteht, die ein Material eines endlichen elektrischen Widerstandes derart enthält, daß die elektrische, in der Schließstellung des Ventils von einer Konstantspannungsquelle aus zwischen den zwei Bauteilen fließende Strommenge (oder das Potential von einer Konstantstromquelle, das parallel zu diesen Bauteilen vorhanden ist) vom Grad des Kontakts zwischen jenen abhängig ist, welcher von einem Grenzwert, beispielsweise einem Minimum, bei einem bloßen Punktkontakt zu einem anderen Grenzwert, beispielsweise einem Maximum, wenn ein vollständiger Kontakt in Umfangsrichtung, d.h. ein Abschluß, vorhanden ist, reicht, und in welchem das metallische Bauteil sowie die Scheibe Mittel besitzen, um sie mit der elektrischen Schaltung, die im Betrieb auf den genannten Strom- oder Potentialwert anspricht, zu verbinden.

7. Ein Ventil nach Anspruch 6, in welchem jedoch der Sitz (5) ein im wesentlichen ringförmiges Bauteil, das ein Material von endlichem elektrischen Widerstand enthält, umfaßt und der Schließkörper (10) aus einer metallischen Scheibe besteht.

8. Ein Ventil nach Anspruch 6 oder 7, in welchem das Material von endlichem elektrischen Widerstand ein Polymeres mit Füllstoff umfaßt.

9. Ein Ventil nach einem der Ansprüche 1 bis 8, in welchem die elektrische Schaltung dazu eingerichtet ist, ein sichtoder hörbares Signal, das für ein ordnungsgemäßes Funktionieren oder eine Fehlfunktion des Ventils kennzeichnend ist, zu erzeugen und/oder ein anschließendes Ereignis, das in Abhängigkeit davon eintritt, ob das Ventil ordnungsgemäß funktioniert oder nicht, herbeizuführen oder zu verhindern.

10. Ein mit Gas betriebener Kessel, der als ein Hauptventil für die Gaszufuhr ein Ventil (15) nach einem der Ansprüche 1 bis 9 enthält, wobei das Ventil solenoidbetätigt ist und die elektrische Schaltung ein Teil des Anfahr-/Zünd-folge-Regelkreises des Kessels bildet.

## Revendications

1. Vanne de commande de la circulation d'un fluide, comprenant un corps (1) dans lequel est réalisé un passage, une admission de fluide (2) et une sortie de fluide (3) raccordées au passage, un siège annulaire de vanne (5) situé dans le passage entre l'admission et la sortie, un obturateur de vanne (10) mobile par rapport au siège (5) entre une position "d'ouverture de vanne" et une position de "fermeture de vanne", le siège de vanne (5) et l'obturateur de vanne (10) comprenant des éléments respectifs conducteurs de l'électricité qui sont distants les uns des autres à la position d'ouverture de la vanne et en contact les uns avec les autre à la position de fermeture de la vanne, ainsi qu'un moyen (14) pour connecter lesdits éléments conducteurs de l'électricité à un circuit électrique sensible au contact entre eux, caractérisée en ce que les éléments conducteurs de l'électricité (5, 10 13, 13') sont conçus pour ne donner une indication de "vanne fermée" dans ledit circuit que lorsqu'il y a un joint circonférentiel complet entre l'obturateur de vanne (10) et le siège de vanne (5).

2. Vanne selon la revendication 1, dans laquelle le siège (5) comprend un élément sensiblement annulaire en matériau isolant de l'électricité et qui supporte à fleur de, et autour, de sa surface qui est en face de l'obturateur (10) un groupe de plusieurs zones (13') conductrices de l'électricité, distantes les unes des autres et l'obturateur (10) comprend un disque de matière isolante de l'électricité qui supporte à fleur de, et autour de, sa surface qui est en face du siège (5) un groupe de plusieurs zones (13) conductrices de l'électricité et distantes les unes des autres, les deux groupes de zones conductrices (13, 13') étant disposés l'un par rapport à l'autre de manière que et uniquement lorsque l'obturateur (10) forme un joint circonférentiel complet avec le siège (5), à la position de fermeture de la vanne, deux zones conductrices voisines de l'un des éléments, sont connectées électriquement l'une à l'autre du fait qu'un trajet conducteur est créé par la coopération de pontage des zones conductrices des deux éléments les unes avec les autres, les deux zones conductrices voisines comprenant un moyen (14) pour les connecter au circuit électrique.

3. Vanne selon la revendication 2, dans laquelle lesdites deux zones conductrices voisines (13') sont des zones conductrices voisines du siège (5).

4. Vanne selon la revendication 2 ou 3, dans laquelle chacun desdits éléments consiste en un polymère isolant de l'électricité et lesdites zones conductrices (13, 13') sont en un métal ou en un polymère conducteur de l'électricité.

5. Vanne selon la revendication 4, dans laquelle ledit polymère est dans chaque cas un caoutchouc, les parties isolantes et conductrices de l'électricité ayant de préférence été moulées ensemble les unes avec les autres.

6. Vanne selon la revendication 1, dans laquelle le siège (5) comprend un élément métallique sensiblement annulaire et l'obturateur (10) comprend un disque consistant en une matière ayant une résistance électrique limitée de façon que la quantité de courant électrique d'une source de tension constante (ou le potentiel d'une source de courant constant) circulant entre eux (ou existant sur) les deux éléments de la vanne en position de fermeture soit fonction du degré de contact entre eux, cette quantité étant comprise entre une limite, par exemple un minimum avec un simple point de contact, et une autre limite, par exemple un maximum, lorsqu'il y a un contact circonférentiel complet, c'est à dire d'étanchéité, et dans laquelle l'élément métallique et le disque comprennent un moyen pour les connecter au circuit électrique qui est sensible, à l'utilisation, à ladite valeur de courant ou de potentiel.

7. Vanne selon la revendication 6, dans laquelle toutefois le siège (5) comprend un élément sensiblement annulaire consistant en une matière ayant une résistance électrique limitée et l'obturateur (10) consiste en un disque métallique.

8. Vanne selon la revendication 6 ou 7, dans laquelle la matière à résistance électrique limitée consiste en un polymère contenant une charge.

9. Vanne selon l'une quelconque des revendications 1 à 8, dans laquelle le circuit électrique est destiné à émettre un signal visible ou audible indiquant un fonctionnement correct ou un mauvais fonctionnement de la vanne et/ou à provoquer ou à empêcher qu'un évènement ultérieur se produise selon que la vanne fonctionne correctement ou non.

10. Chauffe-eau à gaz comprenant, comme vanne principale d'alimentation en combustible, une vanne (15) selon l'une quelconque des revendication 1 à 9, la vanne étant une électrovanne et le circuit électrique faisant partie du circuit de commande de la séquence de mise en service/d'allumage du chauffe-eau.
